Europäisches Patentamt

European Patent Office

Office européen des brevets

(19)

(11) **EP 0 954 756 B1**

(12) **FASCICULE DE BREVET EUROPEEN**

(45) Date de publication et mention
de la délivrance du brevet:
**23.10.2002 Bulletin 2002/43**

(21) Numéro de dépôt: **97953945.9**

(22) Date de dépôt: **24.12.1997**

(51) Int Cl.$^7$: **G01S 13/02**

(86) Numéro de dépôt international:
**PCT/FR97/02421**

(87) Numéro de publication internationale:
**WO 98/029760 (09.07.1998 Gazette 1998/27)**

(54) **TRANSPONDEUR RADIOELECTRIQUE MUNI D'UNE ANTENNE ET D'UN CIRCUIT DE DESACCORD EN FREQUENCE**

RADIOELEKTRISCHER TRANSPONDER MIT ANTENNE UND VERSTIMMUNGSSCHALTUNG

RADIOELECTRIC TRANSPONDER EQUIPPED WITH FREQUENCY DETUNING ANTENNA AND CIRCUIT

(84) Etats contractants désignés:
**AT BE CH DE DK ES FI FR GB GR IE IT LI LU MC NL PT SE**

(30) Priorité: **27.12.1996 FR 9616061**

(43) Date de publication de la demande:
**10.11.1999 Bulletin 1999/45**

(73) Titulaire: **GEMPLUS**
**13881 Gémenos Cédex (FR)**

(72) Inventeur: **LEDUC, Michel**
**F-13530 Trets (FR)**

(56) Documents cités:
**EP-A- 0 638 819**      **EP-A- 0 681 192**
**WO-A-89/10030**      **US-A- 5 287 112**

Printed by Jouve, 75001 PARIS (FR)

**Description**

La présente invention concerne le domaine de la détection et/ou de l'interrogation de transpondeurs radioélectriques à l'aide d'un système de détection et/ou de lecture radioélectrique adapté. De tels transpondeurs servent particulièrement à détecter ou à identifier des objets mobiles sur lesquels les transpondeurs sont disposés.

De tels systèmes peuvent notamment être utilisés pour la reconnaissance d'individus porteurs de badges, de véhicules porteurs de badges au péage d'une autoroute ou encore de marchandises entreposées ou mises en vente dans des magasins.

Un transpondeur est un émetteur-récepteur (transmetteur-répondeur) répondant automatiquement au signal extérieur d'un émetteur du système de détection.

Les transpondeurs radioélectriques, dénommés badges pour certaines applications, ou étiquettes, ont aussi pour rôle de transmettre à distance des informations en réponse aux signaux d'un émetteur de système d'interrogation.

Dans la suite de la description le terme radioélectrique sera abrégé sous sa forme commune "radio".

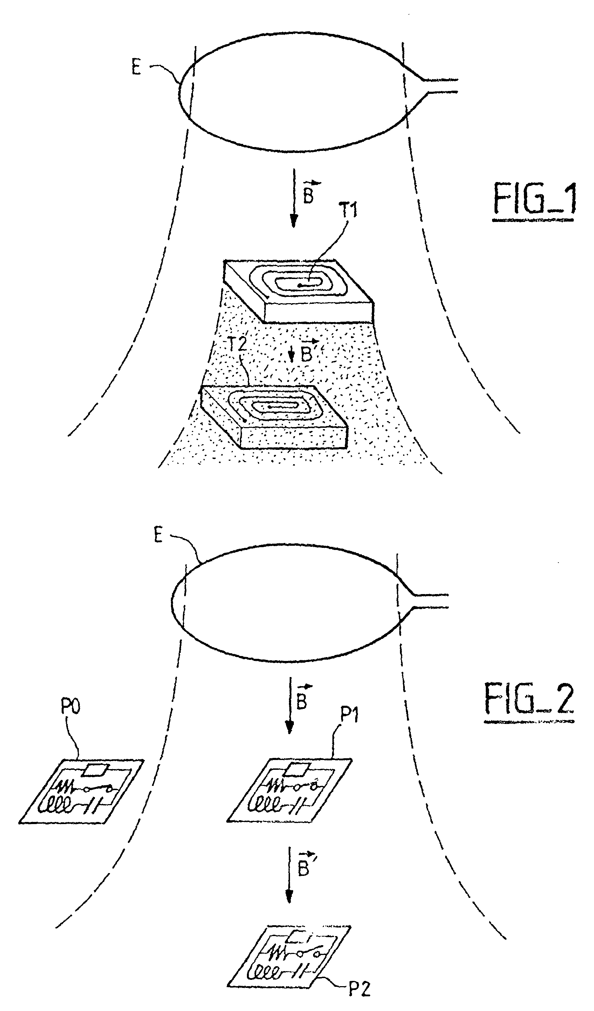

Les systèmes de détection et/ou d'interrogation de transpondeurs radio connus comportent un émetteur/récepteur E et des transpondeurs T1, T2 tels que schématisés à la figure 1.

L'émetteur/récepteur E génère un champ radio B (ou champ électromagnétique). Lorsqu'un transpondeur T1 se trouve à l'intérieur des limites du champ B, le transpondeur capte le champ et signale sa présence à l'émetteur/récepteur E.

On utilise couramment des transpondeurs dit "actifs" qui réemettent ainsi un signal radio appelé signal de réponse destiné à l'émetteur/récepteur E. Le signal de réponse peut comporter des informations permettant d'identifier le transpondeur et/ou l'objet sur lequel il est disposé.

Pour réemettre un signal radio, les transpondeurs actifs peuvent comporter une source d'énergie autonome. Mais de préférence, le transpondeur récupère l'énergie du champ radio B pour alimenter son circuit électronique. Pour capter pleinement le champ ou le signal radio, le transpondeur comporte une antenne radio. L'antenne est constituée par exemple d'une spire métallique de circuit imprimé, ce qui présente l'avantage de réduire les dimensions du transpondeur.

Certains transpondeurs dits "passifs" comportent simplement une boucle métallique court-circuitée. La présence d'un tel transpondeur dans le champ d'un émetteur E, constitué comme représenté figure 1, d'une boucle parcourue par un courant, modifie l'induction réciproque de la boucle d'émetteur E et de la boucle du transpondeur T1.

Ce système d'émetteur et de transpondeur passif est donc analogue au circuit primaire et secondaire d'un transformateur électrique. L'émetteur/récepteur E peut ainsi détecter la présence d'un transpondeur T1 dans son champ en détectant une modification de son courant d'induction.

En outre il existe des systèmes de transmission à transpondeur, dans lequel un émetteur radio envoie des informations qui peuvent être enregistrées sur une puce électronique contenue dans le transpondeur.

De façon générale la présente demande vise tout système de détection et/ou d'interrogation de transpondeurs, les transpondeurs pouvant être détectés ou bien interrogés par l'émetteur/récepteur voire même enregistrés. Le terme d'émetteur/récepteur désigne généralement tout dispositif permettant d'émettre un champ radio et de détecter ou d'interroger des transpondeurs présents dans le champ, le dispositif étant de préférence apte à recevoir un signal radio de réponse provenant d'un des transpondeurs.

Il est connu selon le document WO8910030 qu'un transpondeur est capable à la fois d'emmagasiner de l'énergie et d'échanger des données, et de choisir de favoriser ou défavoriser l'une des deux fonctions en modifiant les paramètres de son antenne, notamment son impédance.

Des difficultés apparaissent lorsque plusieurs transpondeurs se présentent en même temps dans le champ radio B. Les transpondeurs répondent alors tous en même temps à l'excitation du champ B ou il ne donnent pas de réponse.

Pour éviter cette confusion, il a été proposé de temporiser les réponses des transpondeurs, chaque transpondeur répondant à l'excitation d'un signal d'initialisation de l'émetteur, après un temps aléatoire.

Des émetteurs particuliers peuvent aussi être en mesure de détecter dès temps de réponse particuliers de transpondeurs et en déduire que deux d'entre eux se trouvent dans une même zone. Une solution de ce type est proposée par le document EP0638819.

Cependant, dans de nombreux cas, il demeure des transpondeurs qui ne répondent pas à l'excitation du champ radio B ou du signal radio, les transpondeurs semblant inhibés.

Ce problème non résolu est évoqué en particulier dans le document FR-A-2 717 593. On constate le fait que "deux étiquettes voisines peuvent se trouver dans le champ d'un même lecteur, ce qui risque de provoquer leur inhibition réciproque automatique".

Un objet de l'invention est d'optimiser la détection et/ou l'interrogation de multiples transpondeurs présents dans le champ du détecteur et/ou lecteurs E.

Un autre objet est d'éviter les perturbations du fonctionnement du transpondeur causées par la proximité des autres transpondeurs.

Une explication de l'inhibition réciproque des transpondeurs est qu'un transpondeur provoque un effet d'ombre radio visible figure 1, si bien qu'un autre transpondeur se trouvant dans l'ombre ne reçoit plus assez de champ ou d'énergie pour fonctionner correctement.

Selon l'invention, ces objets sont atteints en prévoyant que l'antenne d'un transpondeur peut être désaccordée en fréquence ou désadaptée en impédance, de sorte que le transpondeur et son circuit électronique absorbent moins de champ radio et d'énergie.

Ainsi un autre transpondeur situé à proximité du transpondeur désadapté ou désaccordé pourra recevoir suffisamment de champ radio et d'énergie pour fonctionner correctement.

Le système de transmission pourra alors détecter ou consulter cet autre transpondeur comme s'il se trouvait seul dans le champ B de l'émetteur.

L'objet de la présente invention est défini dans la revendication 1.

De préférence, l'invention est réalisée en prévoyant que les moyens d'adaptation permettent d'accorder l'antenne selon la fréquence radioélectrique déterminée, et en ce que les moyens de désadaptation permettent de désaccorder l'antenne par rapport à la fréquence radioélectrique déterminée.

Un premier mode de réalisation prévoit que les moyens de désadaptation et/ou d'adaptation consistent à modifier une valeur de capacité, l'antenne ayant une valeur d'inductance, de sorte que la fréquence d'accord de l'antenne est modifiée par rapport à la fréquence déterminée des signaux radioélectriques.

Un second mode de réalisation prévoit que les moyens d'adaptation et/ou de désadaptation permettent de modifier l'adaptation d'impédance entre l'antenne et le circuit électronique.

Dans un exemple du second mode de réalisation, les moyens d'adaptation et/ou de désadaptation consistent à modifier une valeur de charge et/ou de résistance afin de modifier la valeur d'impédance de l'antenne et/ou la valeur d'impédance du circuit électronique.

Ainsi selon une caractéristique, lorsque deux transpondeurs sont présentés dans un champ radioélectrique, chacun des transpondeurs reçoit le champ radioélectrique et/ou les signaux de fréquence déterminé quelle que soit la position d'un transpondeur par rapport à l'autre transpondeur, chaque transpondeur comportant les moyens d'adaptation et de désadaptation pour éviter les perturbations radioélectriques provoquées par la proximité de l'autre transpondeur.

Selon une autre caractéristique, les transpondeurs passent dans un état sélectionné tour à tour, un seul transpondeur ou un faible nombre de transpondeurs étant dans un état sélectionné à un instant de temps.

Selon une autre caractéristique, un transpondeur passe dans un état non sélectionné pendant une durée de temps correspondant à une inhibition temporisée du transpondeur.

Il est prévu également des systèmes de transmissions adaptés aux transpondeurs selon l'invention.

L'invention sera mieux comprise à la lecture de la description et des dessins qui vont suivre, donnés à titre d'exemple non-limitatifs ; sur les dessins annexés :

- la figure 1 représente un schéma de principe de système de transmission à transpondeur selon l'état de la technique ;
- la figure 2 représente un schéma de principe de système de transmission à transpondeur selon l'invention ;
- la figure 3 représente un schéma de circuit de transpondeur selon un premier mode de réalisation de l'invention ;
- la figure 4 représente un schéma de circuit de transpondeur selon un second mode de réalisation de l'invention.

La figure 1 montre deux transpondeurs T1 et T2 classiques présentés dans le champ B d'un émetteur/récepteur E. Le transpondeur T1, en vue directe de l'émetteur E reçoit correctement le champ B. Le champ radio lui fournit de l'énergie pour fonctionner et signaler sa présence à l'émetteur/récepteur E et éventuellement lui transmettre des signaux radio en réponse. Dans la disposition de la figure 1, le transpondeur T1 s'interpose entre l'émetteur E et le transpondeur T2 qui reçoit alors difficilement le champ radio B'.

Le champ radio B et son énergie sont en effet absorbés par le transpondeur T1 qui forme en quelque sorte un écran radio. Cet effet d'ombre radio empêche souvent une bonne détection du transpondeur T2, celui-ci ne recevant pas assez de champ radio et d'énergie pour fonctionner correctement.

On observe de façon générale un effet d'atténuation ou d'inhibition réciproque lorsque les transpondeurs classiques sont voisins, si bien que les transpondeurs ne sont pas correctement détectés ou ne peuvent pas communiquer de réponse à l'émetteur/récepteur.

Les transpondeurs classiques ayant de préférence des dimensions réduites le spécialiste élabore des antennes particulièrement accordées à la fréquence du champ radio que l'antenne doit recevoir et parfaitement adaptées en impédance aux circuits électroniques desservis par l'antenne.

De façon surprenante, l'invention prévoit des moyens de désadaptation de l'antenne d'un transpondeur pour limiter l'absorption du champ radio par le transpondeur lorsqu'il n'est pas sélectionné. Un transpondeur voisin peut ainsi recevoir correctement le champ radio et être détecté ou communiquer avec l'émetteur/récepteur.

Par contre des moyens d'adaptation de l'antenne de ce transpondeur voisin sont prévus pour qu'il reçoivent pleinement le champ radio.

Sur la figure 2, similaire à la figure 1, on voit ainsi deux transpondeurs P1 et P2 disposés dans le champ radio B émis par l'émetteur/récepteur E.

On considère dans l'exemple de la figure 2 que l'antenne du transpondeur P1 est désadaptée, c'est à dire que l'antenne absorbe peu, voire pas du tout le champ radio B. Au niveau du deuxième transpondeur P2, le champ radio B' aura alors une puissance normale comme si le transpondeur P1 était absent. Le transpondeur P2 reçoit ainsi suffisamment d'énergie pour fonctionner et être détecté ou réponde à l'émetteur/récepteur E.

L'effet d'ombre radio ou d'écran radio provoqué par les transpondeurs de l'état de la technique est ainsi supprimé ou atténué (comparer à la figure 1).

Un premier mode de réalisation des moyens de désadaptation de l'antenne d'un transpondeur consiste à désaccorder l'antenne par rapport à la fréquence du champ radio de l'émetteur, cette fréquence déterminée étant notée fe.

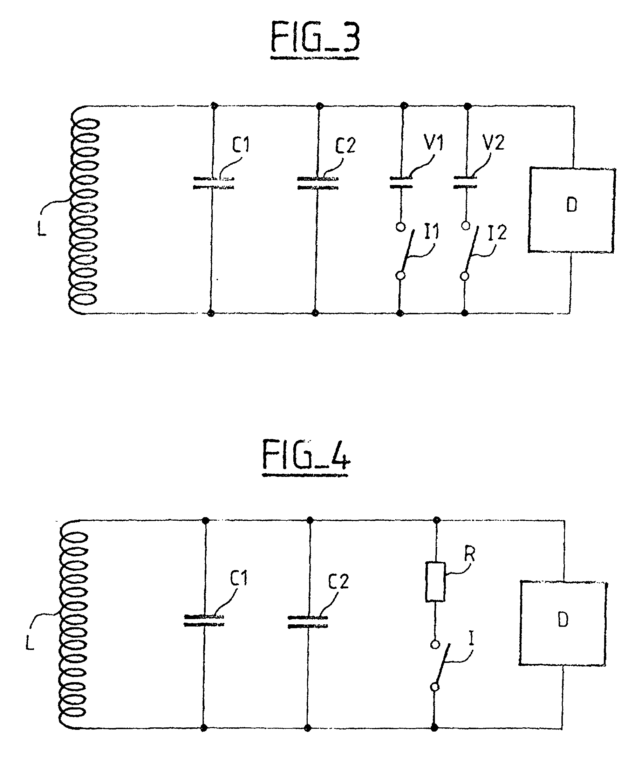

L'antenne d'un transpondeur est généralement constituée d'un circuit résonnant comportant une inductance et une capacité comme illustrée en figure 3. L'inductance L peut ainsi être réalisée sous forme d'un enroulement de spires hélicoïdales. La capacité C peut être constituée d'un condensateur unique. Elle est de préférence constituée d'un ensemble de condensateurs C1,C2 connectés en parallèle de sorte que la capacité de chacun des condensateurs C1,C2 de l'ensemble s'ajoute.

La fréquence de résonnance bien connue d'un tel circuit est déterminée par le produit des valeurs d'inductance L et de capacité C.

Un moyen de désadaptation de l'antenne consiste à accorder l'antenne sur une fréquence de résonnance fd différente de la fréquence fe du champ radio ou des signaux radio transmis aux transpondeur. De la sorte l'antenne du transpondeur est désaccordée par rapport à la fréquence fe transmise. Le transpondeur et son antenne absorbent alors très faiblement le champ ou le signal radio de l'émetteur.

Inversement l'invention prévoit des moyens d'adaptation de l'antenne d'un transpondeur. Ces moyens d'adaptation permettent au transpondeur de recevoir pleinement le champ ou le signal radio en cas de besoin, en particulier lorsque le transpondeur est sélectionné. Le premier mode de réalisation prévoit d'adapter l'antenne en accordant la fréquence de résonnance de l'antenne sur la fréquence fe du champ ou des signaux transmis.

Comme illustré sur la figure 3, les moyens d'accord de la fréquence de résonnance de l'antenne comportent avantageusement une capacité modifiable. La capacité modifiable est obtenue selon l'exemple de la figure 3 avec un condensateur V1 connecté par l'intermédiaire d'un commutateur I1 en parallèle aux condensateurs C1 et C2. Lorsque le commutateur I1 est fermé, la capacité C du circuit résonnant est donc:

$$C = C1 + C2 + V1$$

où C1, C2, V1 sont les valeurs de capacité des condensateurs C1,C2 et V1 respectivement.

La fréquence de résonnance fa de l'antenne adaptée est donc déterminée par le produit suivant:

$$L.C = L.(C1+C2+V1)$$

La fréquence fa de l'antenne adaptée sera ainsi différente de la fréquence fd de l'antenne désadaptée, déterminée par le produit suivant:

$$L.C = L. (C1+C2)$$

La fréquence fd sera correctement décalée par rapport à la fréquence fa en choisissant convenablement la valeur des capacités C1, C2 et V1.

Par exemple, si la fréquence fe du champ ou du signal radio transmis est de 130 kHz, l'antenne sera accordée sur la fréquence fa de 130 kHz en choisissant les valeurs suivantes de ces composants:

- une inductance L de 1µH
- des condensateurs identiques C1,C2,V1 de 0,5 µF.

Le produit des valeurs d'inductance et de capacité vaut alors:

$$L.(C1+C2+V1) = 1,5 . 10^{-6} \ s^2,$$

Ce produit correspond à une fréquence de résonnance de 130 kHz.

Les moyens de désadaptation de l'antenne pourront consister, simplement, à déconnecter le condensateur V1 en ouvrant l'interrupteur I1. Le produit des valeurs d'inductance et de capcacité de l'antenne désadaptée vaut alors:

$$L. (C1+C2 )=1.10^{-6} \ s^2.$$

Ce produit correspond à une fréquence fd de résonnance de l'antenne désadaptée d'environ 160 kHz. L'antenne étant accordée sur une fréquence fd éloignée de la fréquence fa du champ ou des signaux transmis par l'émetteur elle recevra faiblement cette transmission et ne gènera pas la réception du champ ou des signaux par un transpondeur voisin.

La figure 2 illustre cette situation dans laquelle deux transpondeurs T1, T2 se trouvent dans le champ radio de l'émetteur E. En considérant que le transpondeur P1 est dans un état désaccordé, on voit que le champ B est correctement transmis au transpondeur P2, bien que le transpondeur Pi s'interpose.

De façon équivalente , l'accord de l'antenne pourra être obtenu lorsque le commutateur Il est ouvert, les valeurs d'inductance L et des condensateurs C1 et C2 correspondant alors à la fréquence fe de l'émetteur. L'antenne est désaccordée en fermant le commutateur I1 c'est à dire en connectant le condensateur V1 ou encore en connectant plusieurs condensateurs V1,V2 par l'intermédiaire de plusieurs interrupteurs I1,I2.

Il est préférable que la fréquence fd de résonnance de l'antenne désadaptée soit proche de la fréquence d'émetteur fe et donc de la fréquence fa de résonnance de l'antenne adaptée. En effet l'antenne désadaptée reçoit alors faiblement le champ ou le signal radio. Le transpondeur dispose alors d'une énergie faible mais suffisante pour actionner les moyens d'adaptation, comme l'interrupteur I1, et passer dans un état adapté. Cet effet peut être avantageusement utilisé pour activer les transpondeurs tour à tour comme on le verra par la suite.

Un second mode de réalisation des moyens de désadaptation de l'antenne d'un transpondeur consiste à effectuer une désadaptation d'impédance entre l'antenne et les circuits électroniques D du transpondeur.

L'antenne d'un transpondeur présente en effet une certaine impédance à la fréquence fe du champ ou des signaux transmis.

Pour que le circuit électronique D desservi par l'antenne reçoive suffisamment de signal et d'énergie, on effectue classiquement une adaptation d'impédance, c'est à dire que le circuit électronique est calculé et réglé pour présenter une impédance d'entrée sensiblement identique à l'impédance de sortie de l'antenne, pour des signaux électroniques ayant la fréquence fe déterminée.

La figure 4 permet de mieux comprendre ce second mode de réalisation. Elle montre un transpondeur analogue à celui de la figure 3 dans lequel une résistance R est connectable dans le circuit d'antenne pour effectuer une désadaptation d'impédance. L'antenne comporte toujours une inductance L et des condensateurs C1, C2, la capacité des condensateurs étant fixe dans cet exemple de second mode de réalisation. La fréquence de résonnance de l'antenne déterminée par le produit des valeurs d'inductance et de capacité (L.C) est donc fixe et correspond à la fréquence fe du champ et des signaux transmis. Dans ce second mode de réalisation il n'y a donc pas de désaccord en fréquence. Un commutateur I permet de connecter la résistance R en parallèle aux composants L,C1,C2 de l'antenne et au circuit électronique D.

La valeur de résistance R est choisie pour modifier la valeur d'impédance de l'antenne ou la valeur d'impédance du circuit électronique D, la valeur de résistance R étant de préférence faible. La valeur de résistance R peut à l'extrême être nulle, le moyen de désadaptation revenant alors à court-circuiter l'antenne, le transpondeur n'absorbant alors ni énergie, ni champ.

En fonctionnement, l'antenne reçoit normalement le champ ou les signaux de fréquence fe.

Lorsque l'interrupteur I est fermé, la résistance R modifie l'impédance de l'antenne L,C1,C2 et l'antenne est désadaptée en impédance par rapport au circuit électronique.

Dans un tel état désadapté, les signaux électroniques et l'énergie reçus par l'antenne sont faiblement transmis au circuit électronique. L'antenne du transpondeur absorbe alors peu ou pas du tout le champ ou les signaux transmis.

Dans l'état adapté selon ce second mode de réalisation, le commutateur I est ouvert et la résistance R est déconnectée du circuit. L'antenne L,C1,C2 présente alors une impédance adaptée à l'impédance du circuit électronique D desservi par l'antenne. L'antenne transmet alors pleinement le signal et l'énergie qu'elle reçoit au circuit électronique D. Le transpondeur absorbe donc le champ B et l'énergie. Il peut ainsi être correctement détecté par l'émetteur/récepteur E, celui-ci détectant l'absorption du champ. Selon une variante, le transpondeur utilise l'énergie absorbée pour réémettre un fort signal de réponse vers l'émetteur/récepteur E.

D'autres réalisations de l'adaptation/désadaptation d'impédance commandée peuvent être envisagées sans sortir du cadre de la présente invention. L'utilisation d'une ligne quart d'onde, d'un transformateur d'impédance ... sont par exemple deux des multiples moyens d'adaptation et/ou de désadaptation d'impédance à la disposition du spécialiste.

Plus généralement, d'autres moyens de désadaptation et d'adaptation à la transmission de champ ou de signaux bien connus des spécialistes pourront être envisagés de façon équivalente.

Dans la suite de la description on utilisera généralement l'expression "transpondeur adapté" pour désigner un transpondeur dont l'antenne est dans un état adapté, un des précédent moyens d'adaptation à la transmission du champ ou des signaux radio étant mis en oeuvre.

Dans le cas contraire, on parlera de transpondeur désadapté.

Le fonctionnement d'un ensemble de transpondeurs ainsi que des protocoles de transmission d'un système à transpondeurs, selon l'invention, vont maintenant être décrits, ce qui permettra d'illustrer d'autres avantages de l'invention.

Les transpondeurs au repos, c'est-à-dire en dehors du champ radio B, sont de préférence dans un état désadapté.

Ainsi quand plusieurs transpondeurs entrent simultanément dans le champ B, chaque transpondeur peut passer dans un état adapté et être détecté ou interrogé par l'émetteur/récepteur sans perturbation par les autres transpondeurs tous désadaptés.

Dans l'état désadapté, il est prévu qu'un transpondeur reçoive un peu de champ et donc d'énergie. Le transpondeur dispose ainsi du minimum d'énergie nécessaire pour passer de l'état désadapté à l'état adapté en actionnant par exemple le commutateur I, I1, I2.

Cette condition est facilement remplie car une antenne accordée sur une fréquence légèrement éloignée de la fréquence du champ transmis reçoit toujours faiblement le champ radio et son énergie. De même une désadaptation d'impédance entre l'antenne et le circuit électronique permet toujours une faible transmission de signal radio et donc d'énergie.

Un premier protocole de détection/interrogation prévoit qu'un transpondeur passe dans un état adapté de manière aléatoire. Si l'intervalle de temps pendant lequel le transpondeur demeure dans l'état adapté est réduit, la probabilité pour que deux transpondeurs soient adaptés en même temps est faible. On obtient ainsi avantageusement une bonne détection ou bonne réponse des transpondeurs.

Les étapes du protocole de lecture sont donc les suivantes :

- les transpondeurs sont initialement désadaptés.
- parmi les transpondeurs présent dans le champ, donc recevant un peu d'énergie, un transpondeur passe dans l'état adapté de manière aléatoire.
- des signaux radio sont échangés entre ce transpondeur adapté et l'émetteur/récepteur E.
- ce transpondeur redevient désadapté.

Un deuxième protocole consiste à prévoir qu'un transpondeur passe dans l'état adapté après un signal de commande adéquat de l'émetteur E.

Les transpondeurs pourront ainsi être activés tour à tour, un seul transpondeur étant adapté à un instant donné.

On peut également prévoir que les transpondeurs sont tous dans un état adapté lorsqu'ils sont au repos. Dans ce troisième protocole, l'émetteur pourra alors envoyer une commande ordonnant à un transpondeur de passer dans un état désadapté. L'émetteur pourra ainsi désactiver tous les transpondeurs se trouvant dans son champ sauf un. L'étape de transmission de signaux entre l'émetteur et ce transpondeur sélectionné peut alors se dérouler.

Après cet échange l'émetteur active un autre transpondeur.

Et ainsi de suite jusqu'à ce que l'émetteur ait interrogé chaque transpondeur se trouvant dans son champ.

Cette commande par l'émetteur est de préférence combinée à un protocole connu d'identification du code d'un transpondeur bit par bit.

On peut encore utiliser un protocole de détection/interrogation dans lequel le protocole débute à partir d'un signal d'initialisation de l'émetteur/récepteur, chaque transpondeur réémettant un signal de reconnaissance après une période de temps correspondant à un élément de son code d'identification.

De tels protocoles et des systèmes de détection/interrogation sont par exemple décrits dans le brevet EP-B-0 495 708, au nom de la demanderesse.

L'invention prévoit encore un système de détection et/ou d'interrogation de transpondeurs comportant un émetteur/récepteur radioélectrique et une pluralité de transpondeurs tels que décrit précédement susceptibles de se présenter dans son champ.

La figure 2 illustre un exemple d'un tel système de détection. On voit ainsi un ensemble de trois transpondeurs P0, P1, P2 et un émetteur/récepteur E permettant de les détecter et/ou de les interroger.

Les deux transpondeurs P1 et P2 se trouvent dans les limites, représentées en lignes pointillées, du champ radio B émis par l'émetteur E.

Chaque transpondeur comporte une antenne, représentée par exemple à la figure 2 sous forme de circuit résonnant à inductance, capacité, charge et circuit électronique.

De préférence cette antenne sert à recevoir le champ radio B et son énergie ainsi que des signaux radio transmis en modulant le champ B. Dans ce cas, le champ et les signaux ont la même fréquence dite fréquence déterminée fe.

On peut aussi prévoir que le champ et les signaux ont des fréquences distinctes, l'antenne du transpondeur recevant les signaux de la fréquence déterminée en provenance de l'émetteur E et le circuit électronique du transpondeur recevant d'autre part un champ B de fréquence quelconque et son énergie.

On peut encore prévoir que l'antenne du transpondeur émet des signaux de fréquence déterminée destinés au récepteur E, un circuit électronique du transpondeur recevant séparément le champ B de fréquence quelconque.

Chaque transpondeur comporte donc une antenne capable de transmettre des signaux de fréquence radio déterminée entre l'émetteur/récepteur E et le transpondeur.

Lorsque les transpondeurs P1, P2 selon l'invention sont dans le champ B, le transpondeur P1 peut être désadapté ou désaccordé. On évite ainsi toute perturbation d'une transmission entre l'émetteur/récepteur E et le transpondeur P2 par l'autre transpondeur P1 présent dans le champ radio B.

De même, à une autre étape du protocole de transmission, le transpondeur P2 peut être désadapté ou désaccordé afin d'éviter toute perturbation d'une transmission entre l'émetteur/récepteur E et le transpondeur P1.

Pour passer à cette autre étape, il est préférable de prévoir que l'émetteur/récepteur envoie une commande de sélection à un transpondeur de l'ensemble des transpondeurs présents. Ce signal de commande peut être par exemple le code d'identification d'un transpondeur. Le transpondeur concerné passe alors, de préférence, dans un état sélectionné après cette commande provenant de l'émetteur/récepte radio.

Enfin l'invention prévoit que le système de détection/interrogation comporte un émetteur avec un balayage en fréquence sur une plage réduite.

Cette disposition est avantageuse lorsque l'on utilise des transpondeurs dont l'antenne peut être désaccordée en fréquence. Ainsi un transpondeur qui n'aurait pas été détecté ou lu pendant la phase d'interrogation pourra être détecté lors de cette phase de balayage en fréquence.

Selon l'exemple précédent, si la fréquence déterminée fe, sensiblement égale à la fréquence fa sur laquelle s'accorde l'antenne du transpondeur adapté, est de 130 kHz, l'émetteur-récepteur pourra comporter un balayage de fréquence sur la plage 130 kHz - 160 kHz. La plage de fréquence contient alors la fréquence fa de résonnance des antennes adaptées et la fréquence fd de résonnance des antennes désadaptées.

Le mode de fonctionnement des transpondeurs décrit précédement prévoit que l'émetteur génère un champ radio unique ayant la fréquence déterminée, ce champ transmettant éventuellement des informations à un transpondeur comme un signal d'interrogation ou d'initialisation sous forme de signaux radio. Ce signal radio est de préférence une simple modulation du champ radio.

De manière générale l'invention peut être mise en oeuvre avec un transpondeur comportant un dispositif de réception d'énergie distinct du système de réception des signaux radio.

De plus dans les applications précédement envisagées, on a uniquement évoqué le fait que l'antenne des transpondeurs était désadaptée pour éviter d'absorber le champ ou le signal radio de l'émetteur.

Mais de façon plus générale les signaux de réponse envoyés par un des transpondeurs vers l'émetteur/récepteur peuvent également être absorbés par les transpondeurs voisins. Cet effet est d'autant plus gênant que le transpondeur dispose généralement d'une énergie très faible pour une telle réemission.

Il est donc avantageux de prévoir que les autres transpondeurs soient désadaptés pour éviter d'absorber le signal de réponse réemis par un transpondeur.

De façon générale donc, l'invention prévoit un transpondeur susceptible d'être présenté dans un champ radioélectrique, le transpondeur comportant un circuit électronique capable d'absorber et de restituer de l'énergie fournie par un tel champ, et une antenne capable de transmettre des signaux radioélectriques de fréquence déterminée, principalement caractérisé en ce que l'antenne comporte des moyens de désadaptation à une transmission de signaux de fréquence déterminée et des moyens d'adaptation à la transmission des signaux de la fréquence déterminée, les moyens d'adaptation de l'antenne étant mis en oeuvre lorsque le transpondeur est dans un état sélectionné, les moyens de désadaptation de l'antenne étant mis en oeuvre lorsque le transpondeur est dans un état non sélectionné de sorte que le transpondeur non sélectionné présente une absorption limitée des signaux radioélectriques de fréquence déterminée.

L'invention peut être avantageusement mise en oeuvre dans un système de transmission comportant un lecteur ou détecteur destiné à lire des informations sur des étiquettes ou à détecter des objets comportant de telles étiquettes. Ce système s'applique particulièrement à des applications commerciales, par exemple pour une traçabilité de produits ou un suivi de stock, les étiquettes disposant d'informations de prix, d'identification, ou de quantité des produits correspondants.

**Revendications**

1. Transpondeur (P1) susceptible d'être détecté /interrogé selon un protocole de détection /interrogation dans le champ radioélectrique (B) d'un émetteur (E) où se trouve au moins un autre transpondeur (P2), le transpondeur (P1) comportant un circuit électronique (D) capable d'absorber et de restituer de l'énergie fournie par un tel champ, et une antenne (L, C1, C2) capable de transmettre des signaux radioélectriques de fréquence déterminée, **caractérisé en ce que** l'antenne comporte un moyen d'adaptation /désadaptation à une transmission de signaux de fréquence déterminée qui est mis en oeuvre selon le protocole de détection /interrogation, de manière à ce que le transpondeur se trouve soit dans un premier état non adapté dans lequel il présente une absorption limitée des signaux radioélectriques de fréquence déterminée pour ne pas perturber la détection /interrogation de l'autre transpondeur (P2), soit dans un second état adapté pour être détecté /interrogé par l'émetteur.

2. Transpondeur selon la revendication 1, **caractérisé en ce que** le transpondeur est dans un état non adapté en dehors d'un champ radioélectrique (B).

3. Transpondeur selon la revendication 1 ou 2, **caractérisé en ce que** son moyen d'adaptation /désadaptation est mis en oeuvre de manière aléatoire de manière à ce que le transpondeur se trouve dans un état adapté durant un temps réduit.

4. Transpondeur selon la revendication 1, **caractérisé en ce que** le transpondeur est dans un état adapté en dehors d'un champ radioélectrique (B).

5. Transpondeur selon l'une des revendications précédentes, **caractérisé en ce que** son moyen d'adaptation /désadaptation est mis en oeuvre par une commande d'un émetteur /récepteur.

6. Transpondeur selon l'une des revendications précédentes **caractérisé en ce que** les moyens d'adaptation /désadaptation permettent d'accorder l'antenne selon la fréquence radioélectrique déterminée, et **en ce que** les moyens d'adaptation /désadaptation permettent de désaccorder l'antenne par rapport à la fréquence radioélectrique déterminée.

7. Transpondeur selon l'une des revendications précédentes **caractérisé en ce que** les moyens d'adaptation /désadaptation consistent à modifier une valeur de capacité (C1+C2+V1), l'antenne ayant une valeur d'inductance (L), de sorte que la fréquence d'accord de l'antenne est modifiée par rapport à la fréquence déterminée des signaux radioélectriques.

8. Transpondeur selon l'une des revendications précédentes **caractérisé en ce que** les moyens d'adaptation /désadaptation (R, I) permettent de modifier l'adaptation d'impédance entre l'antenne et le circuit électronique.

9. Transpondeur selon l'une des revendications précédentes **caractérisé en ce que** les moyens . d'adaptation /désadaptation consistent à modifier une valeur de charge et/ou de résistance (R) afin de modifier la valeur d'impédance de l'antenne (L, C1,C2) et/ou la valeur d'impédance du circuit électronique (D).

10. Système comprenant une multitude de transpondeurs selon l'une des revendications précédentes et au moins un émetteur /récepteur (E) créant un champ radioélectrique (B) **caractérisé en ce que** les transpondeurs se trouvant dans le champ radioélectrique (B) obéissent à un protocole de détection /interrogation de sorte que tous sont tour à tour détectés et/ou interrogés par l'émetteur /récepteur sans subir les perturbations radioélectriques des autres, un seul d'entre eux ou un faible nombre se trouvant dans un état adapté à un instant donné.

11. Système selon la revendication 10, **caractérisé en ce qu'**un transpondeur passe dans un état non adapté pendant une durée de temps correspondant à une inhibition temporisée du transpondeur.

12. Système selon la revendication 10 dans lequel chaque transpondeur est capable de transmettre des signaux de fréquence radioélectrique déterminée, **caractérisé en ce que** l'émetteur/récepteur radioélectrique comporte un balayage en fréquence dans une plage autour de la fréquence déterminée afin qu'un transpondeur se trouvant dans un état non adapté absorbe de l'énergie fournie par le champ émis par l'émetteur /récepteur et passe dans un état adapté de sorte que le transpondeur soit détecté /interrogé.

**Claims**

1. A transponder (P1) able to be detected/interrogated according to a detection/interrogation protocol in the radio field (B) of a transmitter (E) where at least one other transponder (P2) is situated, the transponder (P1) having an electronic circuit (D) capable of absorbing and restoring energy supplied by such a field, and an antenna (L, C1, C2) capable of transmitting radio signals of a given frequency, **characterised in that** the antenna has a means of matching/mismatching with regard to a transmission of signals of a given frequency which is used according to the detection/interrogation protocol, so that the transponder is either in a first non-matched state in which it exhibits a limited absorption of the radio signals of a given frequency in order not to interfere with the detection/interrogation of the other transponder (P2), or in a second matched state so as to be detected/interrogated by the transmitter.

2. A transponder according to Claim 1, **characterised in that** the transponder is in a non-matched state outside a radio field (B).

3. A transponder according to Claim 1 or 2, **characterised in that** its matching/mismatching means is used in a random fashion so that the transponder is a matched state for a short length of time.

4. A transponder according to Claim 1, **characterised in that** the transponder is in a matched state outside a radio field (B).

5. A transponder according to one of the preceding claims, **characterised in that** its matching/mismatching means is implemented by a command from a transceiver.

6. A transponder according to one of the preceding claims, **characterised in that** the matching/mismatching means make it possible to tune the antenna according to the given radio frequency, and **in that** the matching/mismatching means make it possible to detune the antenna with respect to the given radio frequency.

7. A transponder according to one of the preceding claims, **characterised in that** the matching/mismatching means consist in modifying a capacitance value (C1+C2+V1), the antenna having an inductance value (L), so that the tuning frequency of the antenna is modified with respect to the given frequency of the radio signals.

8. A transponder according to one of the preceding claims, **characterised in that** the matching/mismatching means (R, I) make it possible to modify the impedance matching between the antenna and the electronic circuit.

9. A transponder according to one of the preceding claims, **characterised in that** the matching/mismatching means consist in modifying a load and/or resistance (R) value in order to modify the impedance value of the antenna (L, C1 C2) and/or the impedance value of the electronic circuit (D).

10. A system comprising a multitude of transponders according to one of the preceding claims and at least one transceiver (E) creating a radio field (B), **characterised in that** the transponders situated in the radio field (B) obey a detection/interrogation protocol so that all are in turn detected and/or interrogated by the transceiver without undergoing radio interference from the others, only one of them or a small number being in a matched state at a given moment.

11. A system according to Claim 10, **characterised in that** a transponder goes into a non-matched state for a length of time corresponding to a timed inhibition of the transponder.

12. A system according to Claim 10, in which each transponder is capable of transmitting signals of a given radio frequency, **characterised in that** the radio transceiver comprises a frequency sweep in a range around the given frequency so that a transponder in a non-matched state absorbs energy supplied by the field emitted by the transceiver and passes into a matched state so that the transponder is detected/interrogated.

**Patentansprüche**

1. Transponder (P1), der geeignet ist, gemäß eines Feststellungs- / Abfrageprotokolls im funkelektrischen Feld (B) eines Senders (E), in dem sich wenigstens ein anderer Transponder (P2) befindet, festgestellt / abgefragt zu werden, wobei der Transponder (P1) einen elektronischen Schaltkreis (D) umfasst, der in der Lage ist, die durch ein derartiges Feld gelieferte Energie zu absorbieren und wiederzugeben, und eine Antenne (L, C1, C2), die in der Lage ist, funkelektrische Signale einer bestimmten Frequenz zu übertragen, **dadurch gekennzeichnet, dass** die Antenne ein Anpassungs- / Fehlanpassungsmittel an eine Signalübertragung einer bestimmten Frequenz umfasst, das gemäß des Feststellungs- / Abfrageprotokolls umgesetzt wird, so dass der Transponder sich entweder in einem ersten nicht angepassten Zustand befindet, in dem er eine begrenzte Absorption der funkelektrischen Signale einer bestimmten Frequenz aufweist, um die Feststellung / Abfrage des anderen Transponders (P2) nicht zu stören, oder in einem zweiten angepassten Zustand, um vom Sender festgestellt / abgefragt zu werden.

2. Transponder gemäß Anspruch 1, **dadurch gekennzeichnet, dass** der Transponder außerhalb eines funkelektrischen Felder (B) in einem nicht angepassten Zustand ist.

3. Transponder gemäß Anspruch 1 oder 2, **dadurch gekennzeichnet, dass** sein Anpassungs- / Fehleinstellungsmittel zufällig umgesetzt wird, so dass der Transponder sich während einer verringerten Zeit in einem angepassten Zustand befindet.

4. Transponder gemäß Anspruch 1, **dadurch gekennzeichnet, dass** der Transponder außerhalb eines funkelektrischen Feldes (B) in einem angepassten Zustand ist.

5. Transponder gemäß einem der vorherigen Ansprüche, **dadurch gekennzeichnet, dass** sein Anpassungs- /- Fehleinstellungsmittel durch eine Steuerung eines Senders / Empfängers umgesetzt wird.

6. Transponder gemäß einem der vorherigen Ansprüche, **dadurch gekennzeichnet, dass** die Anpassungs- /- Fehleinstellungsmittel die Abstimmung der Antenne gemäß der bestimmten funkelektrischen Frequenz erlauben, und dass die Anpassungs- / Fehleinstellungsmittel die Fehleinstellung der Antenne im Verhältnis zur bestimmten funkelektrischen Frequenz erlauben.

7. Transponder gemäß einem der vorherigen Ansprüche, **dadurch gekennzeichnet, dass** die Anpassungs- /- Fehleinstellungsmittel in der Änderung eines Kapazitätswertes (C1 + C2 + V1) bestehen, wobei die Antenne einen Induktanzwert (L) hat, so dass die Abstimmungsfrequenz der Antenne im Verhältnis zur bestimmten Frequenz der funkelektrischen Signale verändert wird.

8. Transponder gemäß einem der vorherigen Ansprüche, **dadurch gekennzeichnet, dass** die Anpassungs- /- Fehleinstellungsmittel (R, I) die Änderung der Impedanzanpassung zwischen der Antenne und dem elektronischen Schaltkreis erlauben.

9. Transponder gemäß einem der vorherigen Ansprüche, **dadurch gekennzeichnet, dass** die Anpassungs- /- Fehleinstellungsmittel in der Änderung eines Ladungswertes und / oder Widerstandswertes (R) bestehen, um den Impedanzwert der Antenne (L, C1, C2) und / oder den Impedanzwert des elektronischen Schaltkreises (D) zu ändern.

10. System mit einer Vielzahl Transpondern gemäß einem der vorherigen Ansprüche und wenigstens einem ein funkelektrisches Feld (B) kreierenden Sender / Empfänger (E), **dadurch gekennzeichnet, dass** die sich im funkelektrischen Feld (B) befindenden Transponder einem Feststellungs- / Abfrageprotokoll unterstehen, so dass alle abwechselnd vom Sender / Empfänger werden, ohne die funkelektrischen Störungen der anderen festgestellt und / oder abgefragt, wobei ein einziger oder eine geringe Anzahl von ihnen sich zu einem bestimmten Zeitpunkt in einem angepassten Zustand befindet.

11. System gemäß Anspruch 10, **dadurch gekennzeichnet, dass** ein Transponder während einer einer verzögerten Inhibition des Transponders entsprechenden Zeitdauer in einen nicht angepassten Zustand übergeht.

12. System gemäß Anspruch 10, in dem jeder Transponder in der Lage ist, Signale bestimmter funkelektrischer Frequenz zu übertragen, **dadurch gekennzeichnet, dass** der funkelektrische Sender / Empfänger ein Abtasten in der Frequenz in einer Bandbreite um die bestimmte Frequenz beinhaltet, damit ein sich in einem nicht angepassten Zustand befindender Transponder die vom durch den Sender / Empfänger ausgegebenen Feld gelieferte Energie absorbiert und in einen angepassten Zustand übergeht, so dass der Transponder festgestellt / abgefragt wird.

FIG_1

FIG_2

# FIG_3

# FIG_4